# EUROPEAN PATENT APPLICATION

(11) **EP 3 626 432 A1**
(43) Date of publication of application: **25.03.2020**
(21) Application number: 18195569.1
(22) Date of filing: 19.09.2018
(51) Int. Cl.: B29C 64/153, B33Y 10/00, B29C 64/393, B22F 3/105, B33Y 50/02

(54) **METHOD FOR OPERATING AN APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Reichenbacher, Markus, 96472 Rödental (DE); Vierling, Christoph, 96237 Ebersdorf (DE); Strößner, Johannes, 95126 Schwarzenbach/Saale (DE); Hild, Christian, 96231 Bad Staffelstein (DE); Dressel, Tobias, 96352 Wilhelmsthal (DE)
(74) Representative: Hafner & Kohl Patent- und Rechtsanwälte Partnerschaft mbB

(57) **Abstract**

Method for operating an apparatus (1) for additively manufacturing three-dimensional objects (2) by means of successive layerwise selective irradiation and consolidation of layers of a build material (3) which can be consolidated by means of an energy beam (5), wherein at least one region in a build plane (6) is irradiated in the additive manufacturing process, wherein an interrupted state of the additive manufacturing process is determined and a defined amount of energy is deposited in at least one previously irradiated region (7, 8) of the build plane (6) in an interrupted state of the additive manufacturing process.

## Description

The invention relates to a method for operating an apparatus for additively manufacturing three-dimensional objects by means of successive layerwise selective irradiation and consolidation of layers of a build material which can be consolidated by means of an energy beam, wherein at least one region in a build plane is irradiated in the additive manufacturing process.

Apparatuses for additively manufacturing three-dimensional objects and methods for operating the same are generally known from prior art. For example, additive manufacturing processes are known in which an energy beam is selectively guided across a build plane in which build material is arranged to be irradiated. Hence, the energy beam is used to deposit energy in the build material to consolidate the build material and thereby successively and layerwise build the three-dimensional object. Further, it is known from prior art that the amount of energy that is deposited in a certain volume of build material is crucial for the quality of the additive manufacturing process and the quality of the additive manufactured object.

For example, deviations in the amount of energy that is deposited in a certain volume of build material, may lead to structural changes in that region of the object which can negatively influence the additive manufacturing process and the quality of the additively manufactured object. For instance, if the additive manufacturing process is interrupted for any reason, previously irradiated parts of the current layer of build material will cool down, i.e. the temperature of previously consolidated regions may decrease below a certain temperature. Dependent on the duration of the interruption of the additive manufacturing process, in particular the irradiation process, the build material in the previously consolidated parts can become too cold and thus, a faulty connection to previously consolidated layers of build material beneath the currently consolidated layer can occur. Hence, the quality of the object, e.g. the mechanical properties, can be negatively influenced. Further, residual stress can occur in the three-dimensional object, as different regions of the object are processed under different temperatures. Further, a defined temperature or temperature range, respectively, at which the build material has to be processed, cannot be met anymore.

It is an object of the present invention to provide a method for operating an apparatus for additively manufacturing three-dimensional objects that improves the object quality and/or the process quality, in particular in additive manufacturing processes in which at least one interruption occurs.

The object is inventively achieved by a method according to claim 1. Advantageous embodiments of the invention are subject to the dependent claims.

The method described herein is a method for operating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for operating an apparatus for additively manufacturing three-dimensional objects. The invention is based on the idea that an interrupted state of the additive manufacturing process is determined and a defined amount of energy is deposited in at least one previously irradiated region of the build plane in response to the interrupted state of the additive manufacturing process. Hence, if the additive manufacturing process is interrupted for any reason, it is assured that a defined consolidation behavior of the previously irradiated regions is achieved by depositing the defined amount of energy in those previously irradiated regions. In other words, regions in the build plane that have been irradiated with the energy beam before the interruption of the additive manufacturing process can be kept in a defined consolidation state until the additive manufacturing process is continued. This is achieved by depositing the defined amount of energy that keeps the at least one previously irradiated region in the defined consolidation state, for example in an at least partially melted state of the build material in the previously irradiated region.

Hence, negative impacts on the process quality and the object quality can be avoided, since the previously irradiated region can be kept in the defined consolidation state until the additive manufacturing process is continued. Therefore, the previously irradiated region does not cool down and following layers can be built with a desired connection to the previously irradiated region.

As described before, the "interrupted state" may refer to a state in which the successive consolidation of build material is not possible, e.g. since the powder module providing build material is empty. In other words, during an interrupted state, the additive manufacturing process does not advance, e.g. no further layers of the object are manufactured until the additive manufacturing process is continued, i.e. until the interrupted state is over. The interrupted state may be an exchange process of at least one component of the apparatus, in particular a powder module of the apparatus, and/or a refill process in which at least one material of the apparatus, in particular build material, is refilled and/or a calibration process of at least one component and/or a calculation process, in particular for calculating build data. Therefore, during various interruptions of the additive manufacturing process, in which at least one previously irradiated region cools down, e.g. due to heat dissipation, it is possible to precisely heat the previously irradiated region via the deposition of the defined amount of energy to compensate the heat dissipation.

The interrupted state may continue for a defined time, preferably for at least 10 seconds, in particular for at least 120 seconds. It is also possible that, e.g. during a refill process in which build material is refilled, the interrupted state continues for 1 to 20 minutes. Thus, it is possible to deposit the defined amount of energy during the interrupted state and thereby, keep the previously irradiated regions on a defined temperature.

According to an embodiment of the inventive method, interruption information can be generated relating to the interrupted state of the additive manufacturing process performed on the apparatus and the defined amount of energy can be deposited in the at least one previously irradiated region of the build plane dependent on the interruption information. The interruption information may comprise any arbitrary parameter relating to the interrupted state of the additive manufacturing process, such as the duration of the interruption, the begin of the interruption, the end of the interruption, the cause of the interruption and the like. The interruption information may, for example, be generated via a control unit of the additive manufacturing apparatus and may indicate how long the interrupted state of the additive manufacturing process will endure. Thus, it is possible to determine the duration for which energy has to be deposited in the previously irradiated region and/or the amount of energy that has to be deposited.

Preferably, a heat dissipation from the at least one previously irradiated region is compensated via the deposition of the defined amount of energy. Thus, the cooldown of the part of the object that is built via the at least one previously irradiated region of the build plane can be avoided by compensating the amount of energy that is dissipated via heat dissipation. By avoiding the object or the previously irradiated region to cool down it is possible to avoid negative effects on the properties of the object, such as negative impacts on the mechanical properties or the generation of residual stress due to undesired temperature gradients. Therefore, by depositing the defined amount of energy it is possible to compensate the amount of energy that is lost, wherein the previously irradiated region can be kept at the same temperature that was met at the beginning of the interrupted state or at any other arbitrary temperature, respectively.

The inventive method can further be improved by heating the at least one previously irradiated region to a defined target temperature. Hence, a defined amount of energy can be deposited in the previously irradiated region in that a defined target temperature is met or is kept in the previously irradiated region. The temperature of the previously irradiated region is one way to describe the consolidation state of the build material in the previously irradiated region. For example, a melting temperature of the build material can be defined as defined target temperature, wherein due to the deposition of the defined amount of energy the melting temperature can be kept stable until additive manufacturing process can be continued.

Hence, the defined target temperature can be chosen in that the build material in the region remains in the same consolidation state as before the interruption, in particular the build material can remain molten. Therefore, if the previously irradiated region comprises build material in a molten consolidation state, it is possible to keep that consolidation state stable until the additive manufacturing process is continued. Hence, it is assured that the build material does not cool and change into a different consolidation state and cause negative impacts on the properties of the object.

According to another embodiment of the inventive method, a different defined amount of energy can be deposited for at least two different regions, in particular dependent on the corresponding cross-section of the object in the actual layer. Hence, two different regions in the same layer can be provided with different defined amounts of energy, for example a first defined amount of energy can be deposited in a first region and a second defined amount of energy can be deposited in a second region. Hence, it is possible to define different amounts of energy for different regions of the build plane, especially dependent on the corresponding cross-section of the object.

For example, if the object comprises different regions in the actual layer it is possible to characterize the different regions and assign two different amounts of energy or different energy requirements to those regions, for example dependent on the geometrical structure of the regions. Hence, shell parts or filigree structures may require less energy than large parts or massive parts with large coherent areas, for instance. Further, the underground of the actual layer can be taken into calculation, in particular whether a build plate or consolidated build material is beneath the previously irradiated region or whether the previously irradiated region is based on non-consolidated build material. The parameters (e.g. the thermal conductivity) of the underground of the actual layer (previously consolidated region) have significant impact on the heat dissipation behavior and therefore, influence the amount of energy that is required.

The inventive method may further be improved by determining the temperature of the at least one previously irradiated region and adjusting the defined amount of energy dependent on the determined temperature and the defined target temperature. Thus, it is possible to determine the actual temperature of the previously irradiated region, wherein the determined temperature can be compared with the defined target temperature that has been defined for that previously irradiated region. Dependent on a determined difference between the determined temperature and the defined target temperature, the defined amount of energy that is deposited in the previously irradiated region can be adjusted. For example, if the determined temperature is beneath the defined target temperature, more energy has to be deposited in the previously irradiated region to meet the defined target temperature. By determining the temperature of the previously irradiated region and adjusting the amount of energy that is deposited in the previously irradiated region allows for a closed loop control.

According to another embodiment of the inventive method, the defined amount of energy can be adjusted dependent on a desired temperature gradient between the at least one previously irradiated region and at least one adjacent region and/or a desired heat flow in the build plane. Thus, it is possible to define a temperature gradient (desired temperature gradient) between at least two adjacent regions. Therefore, a temperature gradient can be defined between the at least one previously irradiated region and another region adjacent to the previously irradiated region. The at least one other region may also be a previously irradiated region or a non-consolidated region, for instance. It is also possible to adjust the defined amount of energy dependent on a desired heat flow in the build plane, for example for reducing stress in the object.

The defined amount of energy can, for example, be deposited via the same energy beam that is used for irradiating the build material in a regular mode of operation of the apparatus, preferably with a different intensity, in particular a reduced intensity. Hence, the energy beam can be used in the interrupted state of the additive manufacturing process to deposit the defined amount of energy and thereby, avoid a cooling of the previously irradiated regions that have been irradiated with the energy beam before the interrupted state. The energy beam can be used with reduced intensity or any other arbitrary intensity that is required to deposit the defined amount of energy that is suitable, for example for meeting the defined target temperature. Besides, it is also possible to use another energy beam additionally or alternatively to the energy beam used in the additive manufacturing process.

According to another embodiment of the inventive method, a maximum amount of energy can be defined so as to avoid a structural change of the build material in the at least one previously irradiated region. Hence, it is possible that, e.g. via a control unit, a maximum amount of energy is defined to avoid structural changes of the build material in the at least one previously irradiated region. Therefore, it is assured that the build material in the previously irradiated region is not heated beyond a defined consolidation state, e.g. to avoid the build material evaporating and generating spatters in the build plane. In other words, it is avoided that the previously irradiated region is (at least partially) heated beyond the defined target temperature, for instance, in that the consolidation state of the previously irradiation region is kept and not exceeded. For example, filigree structures that are irradiated and consolidated in the previously irradiated region are not corrupted by depositing an excess amount of energy in the previously irradiated region.

To distribute the defined amount of energy in the build plane and/or to deposit the defined amount of energy in the build plane it is possible to guide the energy beam along a heating track across the at least one previously irradiated region. The heating track defines the path along which the energy beam is guided across the build plane, in particular across the previously irradiated region in the build plane. By guiding the energy beam along the heating track the defined amount of energy is deposited in the previously irradiated region. Of course, at least one parameter of the energy beam, preferably different parameters used in the heating process, can be varied along the heating track, for example the guiding velocity of the energy beam and/or the intensity of the energy beam and/or the spot size of the energy beam and the like. In other words, different parameters of the energy beam may be adjusted for different sections of the heating track.

The energy beam may be guided continuously or for a defined number of turns along the heating track during the interrupted state, preferably dependent on the interruption information. For example, it is possible to continuously guide the energy beam along the heating track until the additive manufacturing process can be continued to ensure that the defined amount of energy is deposited during the interrupted state. It is also possible to define a number of turns for which the energy beam is guided along the heating track during the interrupted state. Preferably, the control of the energy beam, in particular guiding the energy beam along the heating track, can be chosen or defined dependent on the interruption information. Of course, it is also possible to take the geometrical structure of the previously irradiated region into calculation to ensure that the defined amount of energy is deposited in each section of the previously irradiated region.

Further, it is possible to continue the additive manufacturing process dependent on the interruption information, e.g. after the interruption is over. If the interruption information indicates that the additive manufacturing process does not longer have to be interrupted (paused), it is possible to continue the additive manufacturing process, wherein due to the position of the defined amount of energy in the previously irradiated region, the additive manufacturing process can be continued from where it was interrupted.

Besides, the invention relates to an irradiation device for an apparatus for additively manufacturing three-dimensional objects by means of successive layerwise selective irradiation and consolidation of layers of a build material which can be consolidated by means of an energy beam, wherein the irradiation device is adapted to irradiate at least one region in a build plane during the additive manufacturing process with the energy beam, wherein the irradiation device is adapted to deposit a defined amount of energy in at least one previously irradiated region of the build plane in response to a determined interrupted state of the additive manufacturing process performed on the apparatus.

Further, the invention relates to an apparatus for additively manufacturing three-dimensional objects by means of successive layerwise selective irradiation and consolidation of layers of a build material which can be consolidated by means of an energy beam, with an irradiation device, in particular an inventive irradiation device, as described before, which irradiation device is adapted to deposit a defined amount of energy in at least one previously irradiated region of the build plane in response to a determined interrupted state of the additive manufacturing process performed on the apparatus.

Self-evidently, all details, features and advantages described with respect to the inventive method are fully transferable to the inventive irradiation device and the inventive apparatus. Preferably, the inventive method can be performed on the inventive apparatus, for example using an inventive irradiation device.

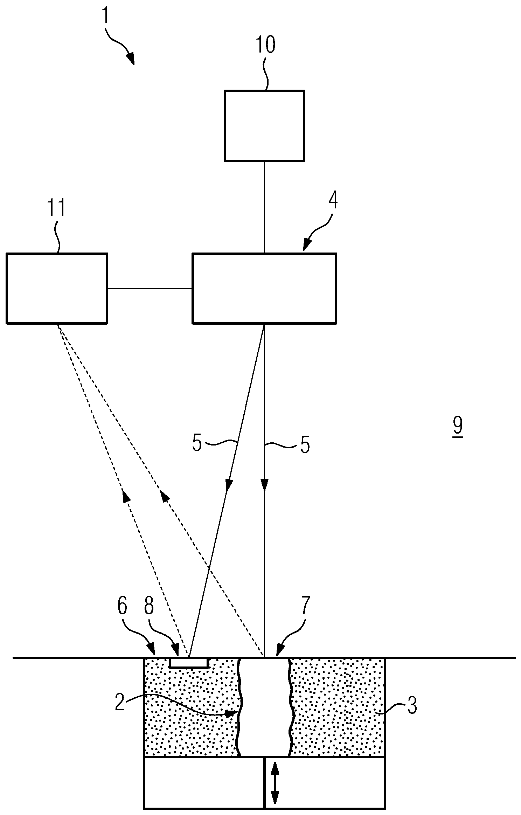

An exemplary embodiment of the invention is described with reference to the Fig. The sole Fig. is a schematic diagram showing an inventive apparatus.

The sole Fig. shows an apparatus 1 for additively manufacturing three-dimensional objects 2 by means of successive layerwise selective irradiation and consolidation of a build material 3. The apparatus 1 comprises an irradiation device 4 that is adapted to generate and guide an energy beam 5 across a build plane 6, i.e. the plane in which the build material 3 is arranged to be irradiated in a regular mode of operation of the apparatus 1. In other words, the energy beam 5 can be selectively guided across the build plane 6 to irradiate and thereby consolidate the build material 3 to build the object 2 in a layerwise successive manner.

In the situation that is depicted in the Fig., an interruption of the additive manufacturing process occurs. Hence, the previously irradiated regions 7, 8 would cool down without a suitable deposition of energy due to heat dissipation in the surrounding build material 3 or the atmosphere inside the process chamber 9, for instance. To avoid the cooling of the previously irradiated regions 7, 8 and thereby avoiding negative impacts on the irradiation process, the irradiation device 4 is adapted to deposit a defined amount of energy via the energy beam 5 in the previously irradiated regions 7, 8 of the build plane 6 during / in the interrupted state.

Hence, it is possible to compensate the heat dissipation from the previously irradiated regions 7, 8 via a deposition of the defined amount of energy that heats the previously irradiated regions 7, 8 accordingly to maintain the temperature and the consolidation state of the previously irradiated regions 7, 8. In particular, it is possible that the consolidation state of the previously irradiated region 7, 8 can be maintained during the interruption of the additive manufacturing process, preferably multiple parts of the previously irradiated regions 7, 8 can remain molten.

As can further be derived from the Fig., the apparatus 1 comprises a control unit 10, which is, inter alia, adapted to generate interruption information relating to the interrupted state of the additive manufacturing process, e.g. the duration of the interruption of the manufacturing process. Hence, the value of the defined amount of energy can be stored or generated in the control unit 10 or received via the control unit 10. Consequently, the control unit 10 may provide the interruption information and/or the value of the defined amount of energy to the irradiation device 4 in that at least one parameter of the energy beam 5 can be adjusted accordingly to ensure that the correct amount of energy is deposited in the previously irradiated regions 7, 8.

It is also possible to define a target temperature, e.g. the temperature the previously irradiated regions 7, 8 were heated to before the additive manufacturing process was interrupted. The apparatus 1 further comprises a temperature determination unit 11 that is adapted to determine the actual temperature of the build material 3 in the previously irradiated regions 7, 8. Thus, a closed loop control can be performed, as the temperature of the previously irradiated regions 7, 8 can be determined via the temperature determination unit 11, wherein the determined temperature can be compared with the defined target temperature. If a deviation between the defined target temperature and the determined temperature occurs, the build material 3 in the corresponding previously irradiated regions 7, 8 can be heated via the energy beam 5. For example, if the determined temperature is beneath the defined target temperature, the defined amount of energy can be increased to ensure that the build material 3 in the previously irradiated regions 7, 8 is heated to the defined target temperature.

It is further possible that the defined amount of energy is adjusted dependent on a desired temperature gradient between the at least one previously irradiated region 7, 8 and at least one adjacent region, e.g. surrounding build material 3 and/or a desired heat flow in the build plane 6. To ensure that the correct amount of energy can be deposited in each previously irradiated region 7, 8, a different defined amount of energy can be deposited for at least two different previously irradiated regions 7, 8. For example, the previously irradiated regions 7, 8 differ in size, underground and geometry, wherein due to two different defined amounts of energy it is assured that both previously irradiated regions 7, 8 can maintain the consolidation state, as described before. By taking the size and the geometry of the previously irradiated regions 7, 8 into calculation it is possible to define the amount of energy that is necessary to maintain the consolidation state, in particular maintain the defined target temperature. It is further possible to take the underground into calculation, as the underground of the previously consolidated region 7, 8 defines or affects the heat dissipation from the uppermost layer of build material 3.

For example, the previously irradiated region 7 is based on top of a partially built object 2, wherein the consolidated part beneath the previously irradiated region 7 leads to improved heat dissipation and therefore, more energy is required to keep the previously irradiated region 7 on the defined target temperature. The previously irradiated region 8 is based on non-consolidated build material 3 and therefore, the heat dissipation is not as large as the heat dissipation of the previously irradiated region 7. Thus, a comparatively minor amount of energy is sufficient to heat the previously irradiated region 7 to the defined target temperature. Of course, other parameters can be taken into calculation besides the size, the underground and the geometry.

Hence, a heating track can be defined along which the energy beam 5 can be guided across the build plane 6 to deposit the defined amount of energy to each previously irradiated region 7, 8 and properly distribute the energy in each previously irradiated region 7, 8. In this exemplary embodiment, the energy beam 5 is used to irradiate and consolidate the build material 3 in the regular mode of operation of the apparatus 1 and in the interrupted state of the additive manufacturing process, the energy beam 5 is used to heat the previously irradiated region 7, 8, as described before.

After the interruption of the additive manufacturing process is over, the additive manufacturing process can be continued from where it ended/was interrupted by the interruption. Of course, any arbitrary other arrangement of the apparatus can be used to perform the additive manufacturing process, in particular a height-adjustable carrier element is not necessary. Self-evidently, the inventive method can be performed on the apparatus 1, preferably using the inventive irradiation device 4.

## Claims

1. Method for operating an apparatus (1) for additively manufacturing three-dimensional objects (2) by means of successive layerwise selective irradiation and consolidation of layers of a build material (3) which can be consolidated by means of an energy beam (5), wherein at least one region in a build plane (6) is irradiated in the additive manufacturing process, **characterized by** determining an interrupted state of the additive manufacturing process and depositing a defined amount of energy in at least one previously irradiated region (7, 8) of the build plane (6) in response to the interrupted state of the additive manufacturing process.

2. Method according to claim 1, **characterized in that** the interrupted state is an exchange process of at least one component of the apparatus (1), in particular a powder module of the apparatus (1), and/or a refill process in which at least one material of the apparatus (1), in particular build material (3), is refilled and/or a calibration process of at least one component and/or a calculation process, in particular for calculating build data.

3. Method according to claim 1 or 2, **characterized in that** the interrupted state continues for a defined time, preferably for at least 10 seconds, in particular for at least 120 seconds.

4. Method according to one of the preceding claims, **characterized by** generating interruption information relating to the interrupted state of the additive manufacturing process performed on the apparatus (1) and depositing the defined amount of energy in the at least one previously irradiated region (7, 8) of the build plane (6) dependent on the interruption information.

5. Method according to one of the preceding claims, **characterized by** compensating a heat dissipation from the at least one previously irradiated region (7, 8) via the deposition of the defined amount of energy.

6. Method according to one of the preceding claims, **characterized by** heating the at least one previously irradiated region (7, 8) to a defined target temperature.

7. Method according to claim 6, **characterized by** choosing the defined target temperature in that the build material (3) in the region remains in the same consolidation state as before the interruption, in particular remains molten.

8. Method according to one of the preceding claims, **characterized by** depositing a different defined amount of energy for at least two different previously irradiated regions (7, 8), in particular dependent on the corresponding cross-section of the object (2) in the actual layer.

9. Method according to one of the claims 6 to 8, **characterized by** determining the temperature of the at least one previously irradiated region (7, 8) and adjusting the defined amount of energy dependent on the determined temperature and the defined target temperature.

10. Method according to one of the preceding claims, **characterized by** adjusting the defined amount of energy dependent on a desired temperature gradient between the at least one previously irradiated region (7, 8) and at least one adjacent region and/or a desired heat flow in the build plane (6).

11. Method according to one of the preceding claims, **characterized by** using the same energy beam (5) for depositing the defined amount of energy that is used for irradiating the build material (3), preferably with a reduced intensity.

12. Method according to one of the preceding claims, **characterized by** defining a maximum amount of energy so as to avoid a structural change of the build material (3) in the at least one previously irradiated region (7, 8).

13. Method according to one of the preceding claims, **characterized by** guiding the energy beam (5) along a heating track across the at least one previously irradiated region (7, 8).

14. Method according to one of the preceding claims, **characterized by** guiding the energy beam (5) continuously or for a defined number of turns along the heating track during the interrupted state, preferably dependent on the interruption information.

15. Method according to one of the preceding claims, **characterized by** continuing the additive manufacturing process dependent on the interruption information.

16. Irradiation device (4) for an apparatus (1) for additively manufacturing three-dimensional objects (2) by means of successive layerwise selective irradiation and consolidation of layers of a build material (3) which can be consolidated by means of an energy beam (5), wherein the irradiation device (4) is adapted to irradiate at least one region in a build plane (6) during the additive manufacturing process with the energy beam (5), **characterized in that** the irradiation device (4) is adapted to deposit a defined amount of energy in at least one previously irradiated region (7, 8) of the build plane (6) in response to a determined interrupted state of the additive manufacturing process performed on the apparatus (1).

17. Apparatus (1) for additively manufacturing three-dimensional objects (2) by means of successive layerwise selective irradiation and consolidation of layers of a build material (3) which can be consolidated by means of an energy beam (5), **characterized by** an irradiation device (4), in particular an irradiation device (4) according to claim 16, which irradiation device (4) is adapted to deposit a defined amount of energy in at least one previously irradiated region (7, 8) of the build plane (6) in response to a determined interrupted state of the additive manufacturing process performed on the apparatus (1).
